# EUROPÄISCHE PATENTSCHRIFT

(11) **EP 1 010 584 B1**
(45) Veröffentlichungstag und Bekanntmachung des Hinweises auf die Patenterteilung: **05.04.2006**
(21) Anmeldenummer: 99123552.4
(22) Anmeldetag: 26.11.1999
(51) Int. Cl.: B60R 16/02

(54) **Leitungsdurchführung durch eine Wand**
Conduit passage through a wall
Traversée de conduite à travers une paroi

(30) Priorität: 15.12.1998 DE 19857784
(43) Veröffentlichungstag der Anmeldung: 21.06.2000
(73) Patentinhaber: DaimlerChrysler AG, 70567 Stuttgart (DE)
(72) Erfinder: Haberstroh, Rudolf, 78136 Schonach/Schwarzwald (DE); Schmid, Peter, 73614 Schorndorf (DE); Schreiber, Siegfried, 75382 Althengstett (DE)

(56) Entgegenhaltungen:
- FR-A- 2 747 449
- US-A- 3 518 359
- US-A- 3 548 079
- US-A- 4 656 689

## Beschreibung

Die Erfindung betrifft eine Durchführung für eine Leitung durch eine Wand.

Die Wand ist z.B. in einem Kraftfahrzeug angeordnet und hier insbesondere als Wand zwischen Motorraum und Fahrgastraum eines Fahrzeugs ausgestaltet. Leitungsbündel mit elektrischen Leitern für Kraftfahrzeuge, wie sie aus DE 34 31 617 A1 und aus DE 37 40 582 A1 bekannt sind, werden üblicherweise durch eine die Wand durchsetzende Durchführungsöffnung hindurchgeführt, indem das Leitungsbündel und eine das Leitungsbündel umgebende Dichtungstülle in Längsrichtung des Leitungsbündels durch die Öffnung "durchgefädelt" werden. Diese "Fädelarbeit" ist jedoch montagetechnisch umständlich und kostenintensiv. Außerdem ist bei der Fädelarbeit nachteilig, daß die Durchführungsöffnung besonders groß ausgebildet werden muß, wenn bei elektrischen Leitungen ein oder mehrere dazugehörige Stecker durch die Wand hindurchgefädelt werden. In diesem Fall ist die Abdichtung der Durchführungsöffnung besonders aufwendig und deshalb anfällig gegen einen vorzeitigen Ausfall der gewünschten Dichtungsfunktion. Dies erhöht die Wartungs- und Reparaturarbeiten und die damit verbundenen Kosten.

Um die Fädelarbeit durch die Stirnwand in einem Kraftfahrzeug zu erleichtern, wird in DE 37 01 597 A1 vorgeschlagen, einen Kabelbaum zunächst durch ein vergleichsweise großes Lenkungsdurchtrittsloch zu fädeln, um danach den Kabelbaum in Radialrichtung in das vergleichsweise kleine, mit dem Lenkungsdurchtrittsloch durch einen Schlitz verbundene Kabeldurchtrittsloch einzusetzen. Eine derartige Montage ist jedoch nur für den Spezialfall möglich, daß ein Lenkungsdurchtrittsloch vorhanden ist. In diesem Fall ist die vorbekannte Montage allerdings auch nur dann sinnvoll, wenn der Kabelbaum in unmittelbarer Nähe der Lenksäule durch die Stirnwand hindurchgeführt werden soll. Anderenfalls steigt der Querschnitt des die Stirnwand durchsetzenden Verbindungsschlitzes rasch an, so daß die Abdichtung des Verbindungsschlitzes zwischen Kabel- und Lenkungsdurchtrittsloch mit erhöhtem Aufwand und den daraus resultierenden, obengenannten Nachteilen verbunden ist. Außerdem entsteht ein großer Materialverschnitt beim Herstellen der Durchführungsöffnung.

Dem Katalog "ELECTRONIC WELT '97'" der CONRAD ELECTRONIC aus 01/1997 ist ein Telefon entnehmbar, dessen Telefonhörer-Gehäuse eine gattungsgemässe Durchführung zum Durchführen der Telefonleitung aufweist.

Aus US-A-3 548 079 ist ein elektrisches Kabel bekannt, welches durch die Öffnung einer Wand hindurchgeführt wird und in diesem Bereich von einem röhrenartigen Dichtungselement umgeben ist. An diesem Dichtungselement ist ein Schraubgewinde angeordnet, welches mit dem Gewinde eines ringartigen Halteelementes korrespondiert. Dieses Halteelement wird nach Art einer Schraubenmutter mit dem Dichtungselement verschraubt und klemmfixiert hierdurch im Montagezustand das Dichtungselement zwischen der Wand und sich selbst.

Der Erfindung liegt die Aufgabe zugrunde, eine montagetechnisch einfache Durchführung für eine Leitung durch eine Wand zu schaffen.

Diese Aufgabe wird durch die Merkrnalskombination des Anspruches 1 gelöst.

Erfindungsgemäß weist die Durchführung eine Wand auf, welche mehrere Teilwände umfaßt. Diese Teilwände werden dann während der Montage miteinander - je nach Anwendungsfall lösbar oder unlösbar - fest verbunden. Vor der Befestigung der Teilwände aneinander wird zunächst die Leitung quer zur Leitungslängsrichtung in die randoffene Teilöffnung einer ersten Teilwand eingesetzt. Danach wird mindestens eine zweite Teilwand, welche ebenfalls eine randoffene Teilöffnung enthält, an der ersten Teilwand befestigt. Dabei korrespondiert die randoffene Teilöffnung dieser zweiten Teilwand mit der randoffenen Teilöffnung der ersten Teilwand, so daß die Teilöffnungen gemeinsam in eine randgeschlossene Durchführungsöffnung für die Leitung "umgewandelt" werden.

Vorteilhaft wird jegliche Fädelarbeit bei der Montage der Leitung vermieden. Da die Leitung quer zur Leitungslängsrichtung in eine erste Teilöffnung eingesetzt wird und weitere Teilöffnungen zusätzlicher Teilwände nachträglich an die erste Teilwand angesetzt werden, können die Ränder der Teilöffnungen den Umfang der Leitung besonders dicht flankieren. Die Durchführungsöffnung der Wand ist deshalb im Gegensatz zu herkömmlichen Konstruktionen besonders klein gehalten. Folglich können Spalte zwischen Leitung und Durchführungsöffnung mit geringem Aufwand und einfacher Dichtungskonstruktion abgedichtet werden. Dieser Vorteil wiederum reduziert die Fertigungskosten und verbessert die Funktionssicherheit einer verwendeten Dichtung.

Im Falle einer Abdichtung der beiden Seiten der Wand voneinander im Bereich der Durchführungsöffnung werden geeignete Dichtungselemente (z.B. Tüllen, Dichtungsringe, -scheiben) verwendet, welche z.B. unmittelbar bei der Herstellung der Leitung und/oder nachträglich als separate Bauteile am Umfang der Leitung fixiert werden können. Anstelle dieser Dichtungselemente kann der Bereich der Durchführungsöffnung auch durch Ausschäumen, Anvulkanisieren od. dgl. der Leitung abgedichtet werden.

In einer bevorzugten Ausführungsform sind die korrespondierenden Teilöffnungen unterschiedlich ausgebildet, wobei die Teilöffnung der ersten Teilwand vorzugsweise den größten Anteil des Öffnungsquerschnitts der Durchgangsöffnung aufweist, um die Montage der Leitung in der ersten Teilwand zu erleichtern.

Vorzugsweise setzt sich die Durchführungsöffnung - wie oben bereits erläutert - aus zwei Teilöffnungen zusammen, da in diesem Fall nur zwei Teilwände benötigt werden, um die Durchführung der Leitung zu realisieren. Auf diese Weise ist die Fertigung und die Montage der Leitungsdurchführung besonders einfach realisierbar.

Es sei erwähnt, daß bei der Erfindung der Begriff "Leitung" stellvertretend für eine ganze Reihe langgestreckter - vorzugsweise schlauchartiger, rohrartiger oder zylindrischer- Bauteile steht.,Es kann sich um optische, elektrische, hydraulische, pneumatische Leitungen od. dgl. handeln. Sowohl eine einzelne Leitung als auch ein Leitungsbündel (z.B. Kabelbaum) kann durch die Durchführungsöffnung hindurchgeführt werden.

Zur Befestigung der beiden Teilwände aneinander können je nach Anwendungsfall unterschiedliche Befestigungsmittel vorgesehen sein. Als unlösbare Befestigung der Teilwände aneinander ist z.B. Kleben, Schweißen, Löten, Vernieten geeignet. Als lösbare Befestigung ist beispielsweise ein Verschrauben der Teilwände miteinander geeignet. Die Teilwände sind je nach Anwendungsfall vorzugsweise aus Metall oder Kunststoff hergestellt. Dabei können die Teilwände aus plattenartigen Tafeln oder B1 echtafeln entsprechend der gewünschten Querschnittsform zugeschnitten werden. Die Teilwände können in einer weiteren bevorzugten Ausführungsform mittels Scharniere oder geeigneter Verbindungs Bauteile miteinander lösbar oder unlösbar miteinander verbunden sein.

Anspruch 1 ermöglicht eine Fixierung der Leitung während der Montage der Teilwände. Die in eine Teilöffnung eingesetzte Leitung wird von dem sich in Richtung der Randkante der Teilwand verjüngenden Aussparungsrand an einem Herausfallen aus der Teilöffnung gehindert. Die Leitung liegt gewissermaßen verrastet in der Teilwand ein. Hierbei kann davon ausgegangen werden, daß der Leitungsmantel oder ein den Leitungsmantel umgebendes Dichtungselement (z.B. Dichtungs-Tülle) eine Eigenelastizität aufweist, wodurch die Leitung in die verjüngte Randaussparung eingesetzt wird, ohne beschädigt zu werden.

Die Maßnahme nach Anspruch 2 ermöglicht eine gute Anpassung der Durchführungsöffnung an den oftmals kreisartigen oder ovalen Querschnitt der Leitung oder einer die Leitung umgebenden Dichtungs-Tülle. So kann ein Aussparungsrand einer Aussparung bzw. einer Teilöffnung die Leitung etwa bündig oder mit verhältnismäßig geringem Radialabstand umgeben. Dadurch sind etwaige Dichtungsprobleme weiter reduziert. Außerdem kann die Leitung ohne besonderen Montageaufwand von dem Aussparungsrand der Teilöffnung einer ersten Teilwand vorfixiert werden, nachdem die Leitung in diese Teilöffnung eingesetzt worden ist. Dabei kann die Umrißform eines Öffnungsrand-Abschnittes ein etwas verkleinertes Abbild des zu umfassenden Querschnittes der Leitung bzw. der Tülle sein, um eine zuverlässige Vorfixierung der Leitung zu unterstützen. Hierzu ist die Tülle vorzugsweise elastisch ausgebildet.

Anspruch 3 verbessert die Fixierung der Leitung während der Montage der Teilwände.

Vorzugsweise ist die lichte Weite (= Öffnungsweite) der Teilöffnung im Bereich der Randkante kleiner als die größte lichte Weite der Teilöffnung, die parallel zur Öffnungsweite verläuft. Hierdurch lassen sich die obengenannten Vorteile fertigungstechnisch einfach dadurch erzielen, indem in zumindest eine Teilwand ein kreisbogenförmiger Ausspärungsrand eingearbeitet, z.B. gebohrt oder gestanzt wird. Dabei überspannt der Aussparungsrand ein geeignetes Kreisbogenmaß,welches größer als 180° und kleiner als 360° ist. Damit ist einerseits eine bedienungsfreundliche Montage der Leitung gewährleistet. Andererseits flankiert der Aussparungsrand selbst bereits die Leitung verhältnismäßig dicht, so daß aufwendige Abdichtungsmaßnahmen entfallen können.

Gemäß Anspruch 4 liegen benachbarte Teilwände im zusammengebauten Zustand der Wand überlappt aneinander an und fördern durch diese Relativlage die Eigenstabilität der Wand. Die cierart gebildete labyrinthartige Trennfuge zwischen den beiden Seiten der Wand verbessert gegenüber einer einfachen stirnseitigen Anlage der Randkanten benachbarter Teilwände auch die Dichtigkeit der Wand.

Nach Anspruch 5 list der Aussparungsrand der ersten Teilwand vom Aussparungsrand mindestens einer weiteren Teilwand quer zur Durchführungsrichtung - sie entspricht etwa der Leitungslängsrichtung im Bereich der Wand - mit Abstand umgeben, um Montagetoleranzen und Maßtoleranzen von Bestandteilen der Durchführung berücksichtigen zu können. Hierdurch kann die zweite Teilwand und ggfs. weitere Teilwände behinderungsfrei an die erste Teilwand herangeführt (richtungsmäßig insbesondere etwa parallel und/oder rechtwinklig zur Wandebene) und daran befestigt werden, selbst wenn der Umfangsmantel der Leitung von einer Dichtungs-Tülle und/oder anderen Dichtungselementen umgeben ist. Dieser Vorteil unterstützt eine automatisierte Fertigung der Durchführung.

Anspruch 6 betrifft eine konstruktiv einfach gestaltete Abdichtung und schlägt ein mit einem Klemmkörper zusammenwirkendes Dichtungselement vor, um eine Durchführungsöffnung in einer Wand zum Durchführen einer Leitung abzudichten. Die Abdichtung kann entweder allein mittels des Klemmkörpers und des Dichtungselementes oder in Kombination mit weiteren Dichtungsteilen erfolgen. Die Abdichtung wird vorzugsweise dadurch unterstutzt, indem das Dichtungselement (z.B. als Tülle ausgestaltet) den Umfangsmantel der Leitung dicht umgibt. Hierzu ist das Dichtungselement vorzugsweise elastisch ausgebildet und liegt zur Abdichtung z.B. nach Art eines Preßsitzes am Umfangsmantel an oder ist mit dem Umfangsmantel einstückig verbunden.

Die Abdichtung mittels Dichtungselement und Klemmkörper gemäß den Anspruchen 6-17 muß - wie bereits gesagt - nicht notwendigerweise bei einer Wand und Durchführungsöffnung gemäß Anspruch 1 eingesetzt werden. Vielmehr ist die vorgenannte Abdichtungs-Konstruktion sowohl für einteilige Wände mit einer randgeschlossenen oder randoffenen Durchführungsöffnung als auch für die mehrteilige Wand gemäß Anspruch 1 geeignet.

Vorzugsweise sind die Dichtlippe des Dichtungselementes und der Klemmkörper im Querschnitt kreisförmig ausgebildet, wodurch entlang des Öffnungsrandes einer Durchführungsöffnung auf konstruktiv einfache Weise eine gleichmäßige Abdichtung erzielt wird. Andere Querschnitte, wie beispielsweise uval, dreieckig, rechteckig oder allgemein polygonförmig, können jedoch ebenfalls verwendet und abhängig von dem Querschnitt der Dürchführungsöffnung und/oder der Leitung ausgewählt werden.

Die Wand und der Klemmkörper korrespondieren klemmbackenartig miteinander und bewirken hierdurch eine besonders stabile Lagerung des Dichtungselementes und seiner Dichtlippe an der Wand. Vorzugsweise wird die Klemmkraft mittels geeigneter Spannmittel erzielt. Die auf die Dichtlippe ausgeübte Klemmkraft erhöht die Dichtungswirkung des Dichtungselementes zusätzlich.

Die Ansprüche 7 bis 10 unterstützen eine mechanisch stabile Klemmfixierung des Dichtungselementes. Dabei ist eine wirksame Klemmfixierung des Dichtungselementes mit konstruktiv einfachen und kostengünstigen Spannmitteln gegeben. Die hierbei vorzugsweise verwendeten Gewindebolzen können bei entsprechender Anordnung an der Wand bzw. den Teilwänden in einer Doppelfunktion als Außengewinde und auch als Schweißbolzen eingesetzt werden.

Die Maßnahme nach Anspruch 11 verbessert die Abdichtung des überlappungsbereiches der sich überlappenden Teilwände kostengünstig und fertigungstechnisch unaufwendig. Der Oberflächensprung im Oberlappungsbereich wird durch eine Ausgleichschräge des Klemmkörpers ausgeglichen. Der Querschnitt der Ausgleichschräge ist in geeigneter Weise an den Oberflächensprung angepaßt, um eine wirksame Klemmung des Dichtungselements und Abdichtung zu erzielen. Vorzugsweise verläuft die Ausgleichschräge konstruktiv einfach in einer einzigen Ebene. Insbesondere schließt die Ausgleichschräge einen Winkel von etwa 45° mit dem unmittelbar benachbarten Oberflächenbereich des Klemmkörpers ein. Mittels der Ausgleichschräge wird vermieden, daß eine Teilwand aufwendig um den Betrag der Wandstärke einer anderen Teilwand abgekröpft werden muß, um dasselbe Oberflächenniveau für eine gute Abdichtung zu erzielen. Eine aufwendige Abstimmung der Teilwände entfällt demnach. Außerdem werden durch die Abkröpfung entstehende Rinnen oder Fugen zwischen den Teilwänden vermieden, welche durch das Dichtungselement möglichst vollständig ausgefüilt werden müßten.

Alternativ ist es jedoch auch möglich, auf die Ausgleichschräge am Klemmkörper zugunsten der vorgenannten Abkröpfung zu verzichten, wenn eine Abkröpfung der einen Teilwand für eine ausreichende Abdichtung durch das Dichtungselement sinnvoll erscheint.

Der Klemmkörper ist vorzugsweise metallisch, z.B. aus Stahl oder Federstahlblech, hergestellt. Ein kostengünstiges Flachmaterial, insbesondere aus Metallblech, ist ebenfalls geeignet. In einer bevorzugten Ausführungsform wird der Klemmkörper aus dem Metallblech einstückig als Stanzzieh- oder Stanzprägeteil gefertigt. Der mit einer zentralen Dichtöffnung versehene Klemmkörper in den vorgenannten metallischen Ausführungsformen hat den vorteil, daß erhöhte Anforderungen an ein montagefreundliches Einfädeln einer Leitung oder auch mehrerer Leitungen bzw. Kabelstränge in die Dichtöffnung erfüllt werden.

Der Klemmkörper kann auch kostengünstig aus einem geeigneten Kunststoff hergestellt sein. Der Kunststoff kann je nach Anwendungsfall elastisch oder im wesentlichen unelastisch sein.

Die Maßnahmen nach den Ansprüchen 12 und 13 erlauben eine gekapselte Anordnung der die eigentliche Abdichtung bewirkenden Dichtlippe innerhalb des Klemmkörpers. Hierdurch ist das Dichtungselement wirksam vor Beschädigungen und Umgebungseinflüssen geschützt. Eine konstante Dichtungswirkung über eine lange Betriebsdauer hinweg ist gewährleistet. Vorzugsweise ist die zu klemmfixierende Dichtlippe hinsichtlich ihrer Querschnittsstärke bzw. Dicke im Ausgangszustand größer als der in Klemmrichtung verlaufende Abstand zwischen einem äußeren Anlagesteg und einem demgegenüber inneren Klemmsteg des Klemmkörpers. Diese geometrischen Verhältnisse ermöglichen mit geringem Kraftaufwand eine zusätzliche Klemmung oder Pressung der Dichtlippe gegen die Wand mit einer entsprechend höheren Dichtungswirkung. Vorteilhaft werden für die Montage mehrere Typen von Klemmkörpern vorgehalten, welche sich im wesentlichen nur hinsichtlich des Abstandes zwischen äußerem Anlagesteg und innerem Klemmsteg unterscheiden. Somit kann bei gleichbleibend einfacher Montage je nach Anwendungsfall eine andere gewünschte Klemmkraft für die Klemmfixierung der Dichtlippe erzielt werden. In weiteren Ausführungsformen kann es für eine geeignete Klemmfixierung ausreichend sein, auf den vorgenannten Abstand zwischen äußerem Anlagesteg und innerem Klemmsteg gegenüber der Dichtlippe zu verzichten. Es kann auch auf den Anlagesteg verzichtet werden, so daß der Dichtungsrand nur einen Klemmsteg zur Fixierung der Dichtlippe aufweist.

Der gemäß Anspruch 15 geschlitzte Klemmkörper vereinfacht die Montage der Durchführung, indem der Klemmkörper einfach durch Aufspreizen auf die Leitung aufgesetzt wird. Dieser Montageschritt kann auch bereits beim Hersteller der Leitung erfolgen. Zudem weist der geschlitzte Klemmkörper eine verbesserte Flexibilität auf und kann gezielt einen Ebenensprung bzw. Oberflächensprung der überlappt aneinander anliegenden Teilwände ausgleichen, wenn der Schlitz parallel zu einer überlappten Randkante einer Teilwand verläuft und die zwei beiderseits des Schlitzes angeordneten Bereiche des Dichtungsrandes jeweils nur an einer Teilwand (unter Zwischenlage der Dichtlippe) anliegen.

Gemäß den Ansprüchen 16 und 17 ist die Leitung mittels einer in Umfangsrichtung der Leitung verlaufenden und an dem Dichtungselement angebrachten Fixiernut besonders montagefreundlich in eine erste Teilwand einsetzbar, wenn die Wand aus mehreren Teilwänden mit jeweils einer Teilöffnung besteht. Die Fixiernut ist vorzugsweise in vorgenannter Umfangsrichtung in sich geschlossen, so daß eine größtmögliche Variabilität bei der Montage der Leitung gegeben ist.

Grundsätzlich kann die erfindungsgemäße. Durchführung der Leitung bei sämtlichen Trennwänden angewandt werden. Ein bevorzugtes Anwendungsgebiet ist allerdings der Fahrzeughau (Anspruch 18), bei dem eine Reihe von Wand- oder Karosseriedurchbrüchen für Kabelsätze und andere Leitungen berücksichtigt- werden müssen. Hier wirkt sich die mit der erfindungsgemäßen Leitungsdurchführung erzielte Montagevereinfachung besonders zeit- und kostensparend aus. Bei Kraftfahrzeugen existieren Trennwände z.B. zwischen Motorraum und Fahrgastraum - die sogenannte Stirnwand - oder zwischen Fahrgastraum und Heckraum, welche von Leitungen durchquert werden. Dabei kommt die erfindungsgemäße Leitungsdurchführung den Bedürfnissen des Rohbaus der Fahrzeuge entgegen, indem eine baukastenartige, modulare Montage des Rohbaus aus mehreren Modulen (z.B. Vorbaumodul, Fahrgastzelle, Fahrzeugdach, Heck) unterstützt wird. Dabei ist beispielsweise an den im Bereich einer Wand miteinander korrespondierenden Modulen jeweils eine Teilwand befestigt. Diese Teilwände werden dann beim Zusammenbau der Module automatisch miteinander zusammengeführt und fest verbunden (z.B. durch Kleben, Schweißen, verschrauben), nachdem die Leitung in einem Zwischenschritt in die erste Teilwand eingesetzt worden ist. Bei einer weiteren Ausführungsform wird die Leitung ebenfalls in eine einem Kraftfahrzeug-Modul zugeordnete erste Teilwand eingesetzt und danach wird die zweite Teilwand (noch ohne Modul) und ggfs. weitere Teilwände an der ersten Teilwand befestigt. Das derart mit mindestens einer weiteren Teilwand ergänzte Modul wird daraufhin mit einem weiteren Modul zusammengeführt.

Vorzugsweise wird zunächst die Leitung etwa quer zur Durchführungsrichtung in eine eine Randkante einer ersten Teilwand unterbrechende, als Teilöffnung wirksame Aussparung eingesetzt. Danach wird mindestens eine weitere Teilwand mit einer Teilöffnung an die erste Teilwand herangeführt und daran befestigt. Dabei nehmen die Teilwände eine derartige Relativlage zueinander ein, daß die miteinander korrespondierenden Teilöffnungen gemeinsam die Durchführungsöffnung bilden.

Je nach Anwendungsfall und vorgegebenen Raumverhältnissen ist es vorteilhaft, daß die Montagerichtung beim Heranführen der Teilwände aneinander quer zur Wandebene und/oder parallel zur Wandebene verläuft.

Die Erfindung wird anhand der in den Figuren dargestellten Ausführungsbeispiele näher erläutert. Es zeigen:
- Fig. 1: eine Explosionsdarstellung der erfindungsgemäßen Durchführung mit zwei Teilwänden,
- Fig. 2: eine Explosionsdarstellung der erfindungsgemäßen Durchführung mit einer Leitung und mit einer Teilwand,
- Fig. 3: eine perspektivische Vorderansicht der.aneinander befestigten Seitenwände mit durchgeführter Leitung,
- Fig. 4: eine perspektivische Rückansicht der aneinander befestigten Seitenwände mit durchgeführter Leitung etwa in Blickrichtung IV gemäß Fig.3,
- Fig. 5: eine Seitenansicht auf einen eine Tülle als Dichtungselement tragenden Leitungsabschnitt der Leitung,
- Fig. 6: eine teilweise geschnittene Seitenansicht auf die Durchführung mit dem Leitungsabschnitt gemäß Fig.5,
- Fig. 7: eine Draufsicht auf einen mit der Tülle zusammenwirkendes Klemmkörper,
- Fig. 8: eine Schnittansicht des Klemmkörpers gemäß Schnittlinie VIII-VIII in Fig.7,
- Fig. 9: eine perspektivische Darstellung der Durchführung etwa gemäß Fig.3, jedoch mit an der Wand fixiertem Klemmkörper gemäß Fig.7,
- Fig. 10: eine perspektivische Darstellung einer weiteren Ausführungsform des Klemmkörpers,
- Fig. 11: eine geschnittene Seitenansicht der beiden Teilwände, wobei eine Teilwand abgekröpft ist,
- Fig. 12: eine geschnittene Ansicht des mit einer Ausgleichschräge versehenen Klemmkörpers in einer weiteren Ausführungsform und
- Fig. 13: eine Draufsicht auf die Durchführung mit einer Ausgleichschräge am Klemmkörper.

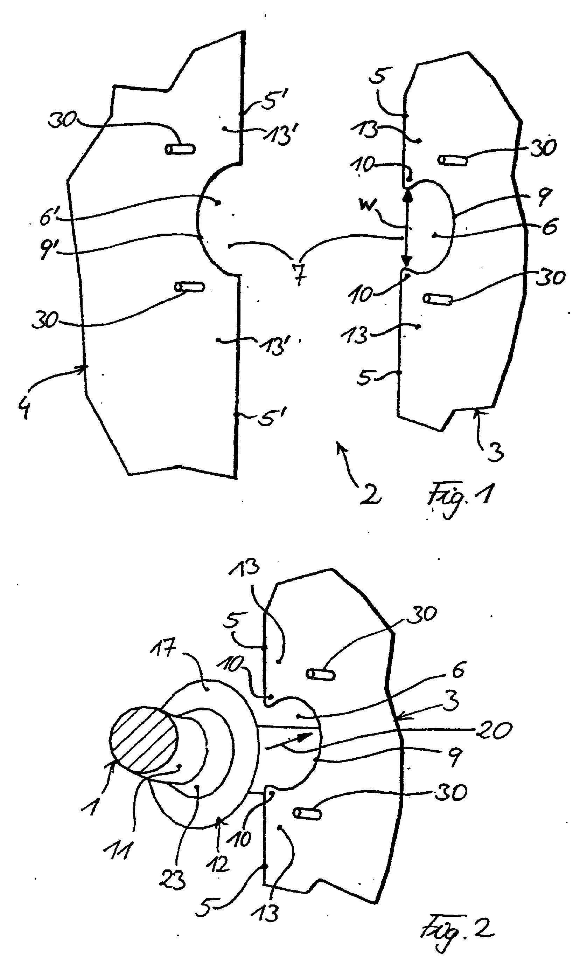

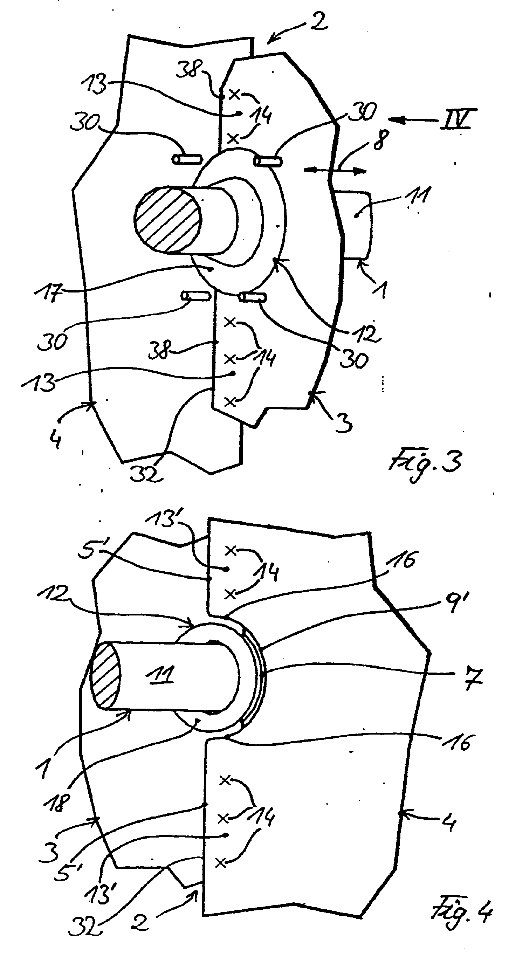

Eine Leitung in Form eines Kabelbaumes 1 wird durch eine Wand 2 hindurchgeführt, welche zwei miteinander korrespondierende und aneinander zu befestigende Teilwände 3 und 4 umfaßt (Fig.1). Beispielsweise handelt es sich bei der Wand 2 um die Stirnwand eines Kraftfahrzeuges, wobei die erste Teilwand 3 Bestandteil der Fahrgastzelle und die zweite Teilwand 4 Bestandteil des Vorbaumoduls sein kann. Die erste Teilwand 3 weist eine Randkante 5 auf, welche von einer als erste Teilöffnung 6 wirksamen Aussparung unterbrochen ist. Die zweite Teilwand 4 weist ebenfalls eine Randkante 5' auf, die von einer als zweiten Teilöffnung 6' wirksamen Aussparung unterbrochen ist. Beide Teilöffnungen 6,6' bilden gemeinsam eine Durchführungsöffnung 7, welche die Wand 2 etwa in Leitungslängsrichtung bzw. Durchführungsrichtung 8 oder mit anderen Worten quer zur Wandebene der Wand 2 durchsetzt (Fig.2).

Die Aussparungsränder 9,9' beider Teilöffnungen 6,6' verlaufen kreisbogenförmig und sind bei aneinander befestigten Teilwänden 3,4 mit ihren Konkavseiten einander zugewandt. Die beiden Aussparungsränder 9,9' unterscheiden sich voneinander durch ihren Radius und ihr Winkelmaß. Der Aussparungsrand 9 der ersten Teilöffnung 6 überspannt einen Kreisbogen von mehr als 180°, so daß der Querschnitt der ersten Teilöffnung 6 in Richtung der unterbrochenen Randkante 5 verjüngt ausgebildet ist. Diese geometrische Ausgestaltung bewirkt zwei etwa keilförmig verlaufende Übergangsbereiche 10 der Teilwand 3 mit der Randkante 5 und dem Aussparungsrand 9 als Keilschenkel. Diese Übergangsbereiche 10 sind als Arretier- oder Rückhaltemittel gegen ein unerwünschtes Herausfallen des Kabelbaumes 1 wirksam, wenn der Kabelbaum 1 in die Teilöffnung 6 eingesetzt worden ist. Hierzu ist die Teilöffnung 6 derart dimensioniert, daß der Aussparungsrand 9 am Umfangsmantel 11 des Kabelbaumes 1 bzw. an einem den Umfangsmantel 11 umgebenden und noch zu erläuternden Dichtungselement in Form einer Dichtungs-Tülle 12 etwa bündig anliegt. Die die Unterbrechung der Randkante 5 bildende lichte öffnungsweite w zwischen den beiden Übergangsbereichen 10 ist deshalb kleiner als der Durchmesser des Kabelbaumes 1 bzw. als der Durchmesser des vom Aussparungsrand 9 umfaßten Bereiches der Tülle 12.

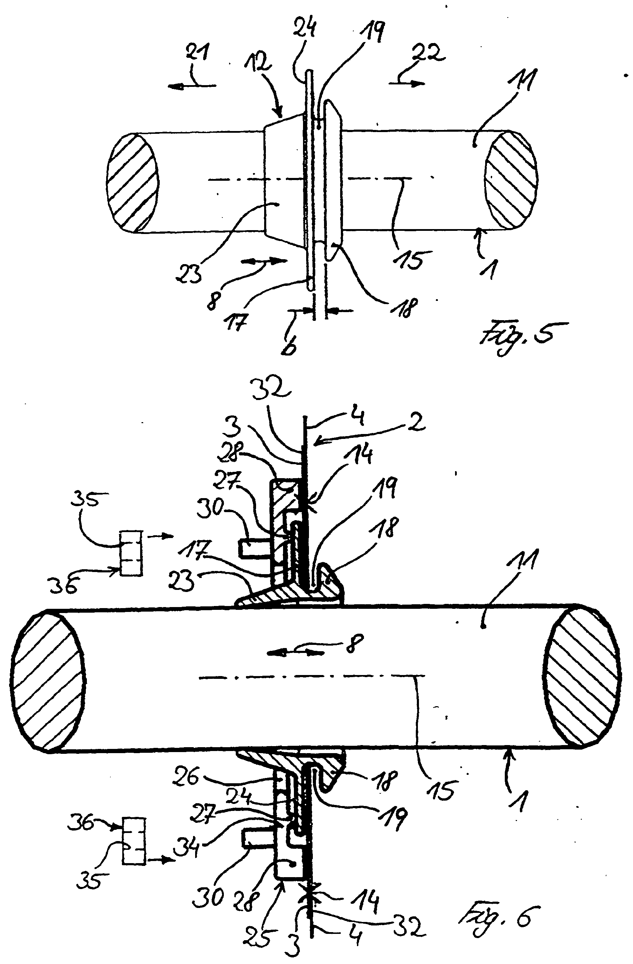

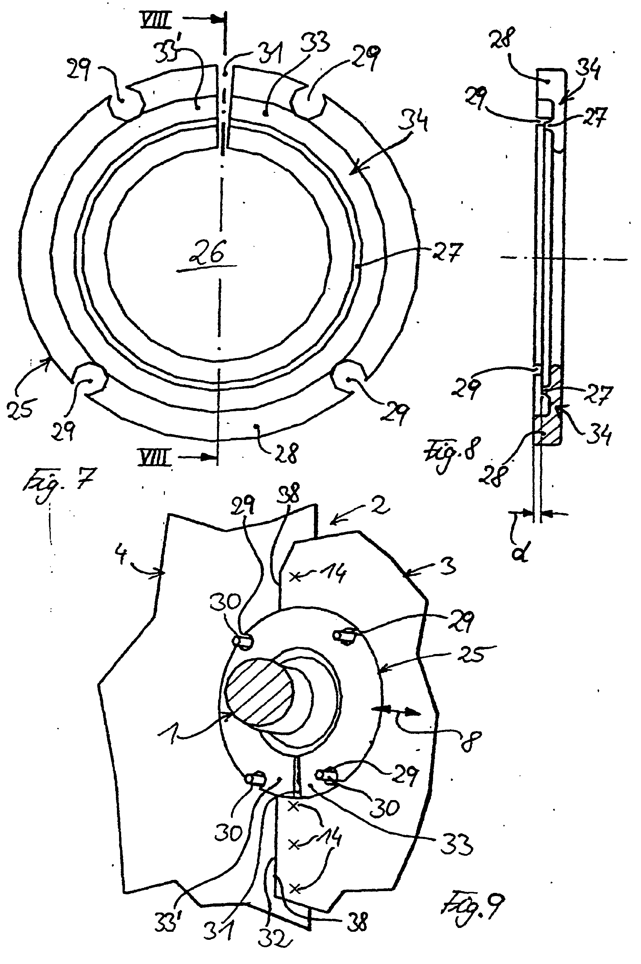

Fig.3 ist der Befestigungszustand der beiden Teilwände' 3,4 entnehmbar. Dabei überlappen sich die beiden Teilwände 3 und 4 mit ihren Aussparungsrändern 9,9' sowie mit Randsegmenten 13,13' und liegen mit diesen Randsegmenten 13,13' planparallel aneinander an (Fig.3, Fig.4). Der Teilwand 3 sind Randsegmente 13 zugeordnet, welche dem Aussparungsrand 9 und den Übergangsbereichen 10 benachbart etwa in Richtung der Randkante 5 verlaufen. Die der Teilwand 4 zugeordneten Randsegmente 13' sind dem Aussparungsrand 9' benachbart und verlaufen etwa in Richtung der Randkante 5'. Im Bereich der gegenseitigen Überlappung sind die Teilwände 3;4 aneinander befestigt, z.B. durch Verschweißen, insbesondere Punktschweißen. Dies ist beispielsweise in Fig. 3 mittels der Schweißpunkte 14 angedeutet.

Im Befestigungszustand der beiden Teilwände 3,4 sind die Aussparungsränder 9,9' etwa konzentrisch zur Mittellängsachse 15 der rotationssymmetrischen Tülle 12 angeordnet. Die Mittellängsachse 15 verläuft dabei etwa quer bzw. rechtwinklig zur Wandebene der Wand 2. Die Teilöffnung 6' hat einen größeren Radius als die Teilöffnung 6, so daß die beiden der Randkante 5' benachbarten Randabschnitte 16 des Aussparungsrandes 9' die Teilwand 3 überlappen und den Aussparungsrand 9 quer zur Mittellängsachse 15 des Kabelbaumes 1 mit Radialabstand umgeben (Fig.4).

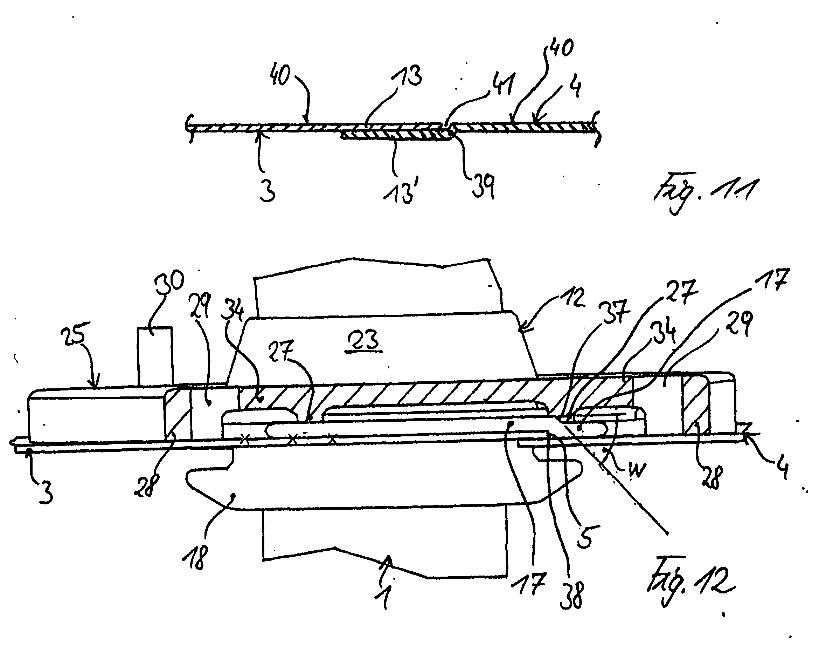

Die zumindest teilweise, vorzugsweise jedoch vollständig elastische Tülle 12 umfaßt den Umfangsmantel 11 des Kabelbaumes 1 dicht (Fig.3). Die Tülle 12 kann einstückig (z.B. stoffschlüssig) mit dem Umfangsmantel 11 verbunden sein oder ist als separates Bauelement auf den Kabelbaum 1 aufgebracht. Die Tülle 12 trägt zwei in Durchführungsrichtung 8 voneinander beabstandete und bezüglich der Mittellängsachse 15 konzentrisch zueinander angeordnete Lippen. Die als Dichtlippe 17 wirksame Lippe hat einen größeren Durchmesser als die zweite Lippe, die als Haltelippe 18 bezeichnet ist. Der in Richtung der Mittellängsachse 15 verlaufende Dicken-Querschnitt der beiden Lippen ist ebenfalls unterschiedlich, wobei die Haltelippe 18 den größeren Dicken-Querschnitt aufweist. Die beiden Lippen 17,18 begrenzen eine in Umfangsrichtung des Kqbelbaumes 1 verlaufende, ringförmig in sich geschlossene Fixiernut 19. Deren parallel zur Mittellängsachse 15 angeordnete Nutbreite b ist größer als die Materialstärke der Teilwand 3 bzw. des in der Fixiernut 19 einliegenden Aussparungsrandes 9 (Fig.5). Der Kabelbaum 1 läßt sich deshalb zusammen mit der Tülle 12 montagefreundlich mit viel Bewegungsspielraum radial zur Leitungslängsrichtung 8 in die Teilöffnung 6 einsetzen. Die Einsetzrichtung 20 ist in Fig.2 dargestellt.

Die Haltelippe 18 ist derart dimensioniert, daß sie die Teilöffnung 6 der ersten Teilwand 3 nach dem Einsetzen des Kabelbaumes 1 abdeckt. Aufgrund ihres verhältnismäßig großen Dicken-Querschnitts entlang der Mittellängsachse 15 weist die Haltelippe 18 trotz elastischer Eigenschaften eine gewisse Eigensteifigkeit auf, welche ein allzuleichtes Umbiegen der radial äußeren Segmente der Haltelippe 18 verhindert. Die Haltelippe 18 ist deshalb als Axialsicherung gegen ein Herausziehen oder Herausschieben des Kabelbaumes 1 aus der ersten Teilwand 3 in Verschieberichtung 21 wirksam. In Gegenverschieberichtung 22 ist ein Entfernen des Kabelbaumes 1 aus seiner Montage-Sollstellung vor allem durch einen Tüllenansatz 23 verhindert, dessen entlang der Mittellängsachse 15 verlaufender Dicken-Querschnitt verhältnismäßig groß ist - im vorliegenden Ausführungsbeispiel mehr als doppelt so groß wie der entsprechende Querschnitt der Haltelippe 18 - und deshalb ebenfalls gegen ein allzuleichtes Umbiegen oder eine Kompression geschützt ist. Dieser Tüllenansatz 23 ist konzentrisch zur Mittellängsachse 15 angeordnet und einstückig mit der Dichtlippe 17 verbunden. Dabei grenzt der Tüllenansatz 23 unmittelbar an der der Haltelippe 18 abgewandten Lippenoberfläche 24 der Dichtlippe 17 an. Der Tüllenansatz 23 hat einen kegelstumpfförmigen Querschnitt, dessen größter Kegelstumpfdurchmesser der Lippenoberfläche 24 zugewandt ist. Dieser größte Kegelstumpfdurchmesser ist kleiner als der Durchmesser der Haltelippe 18. Der Querschnitt des Tüllenansatzes 23 verjüngt sich ausgehend von der Lippenoberfläche 24 in Durchführungsrichtung 8 bzw. in Verschieberichtung 21.

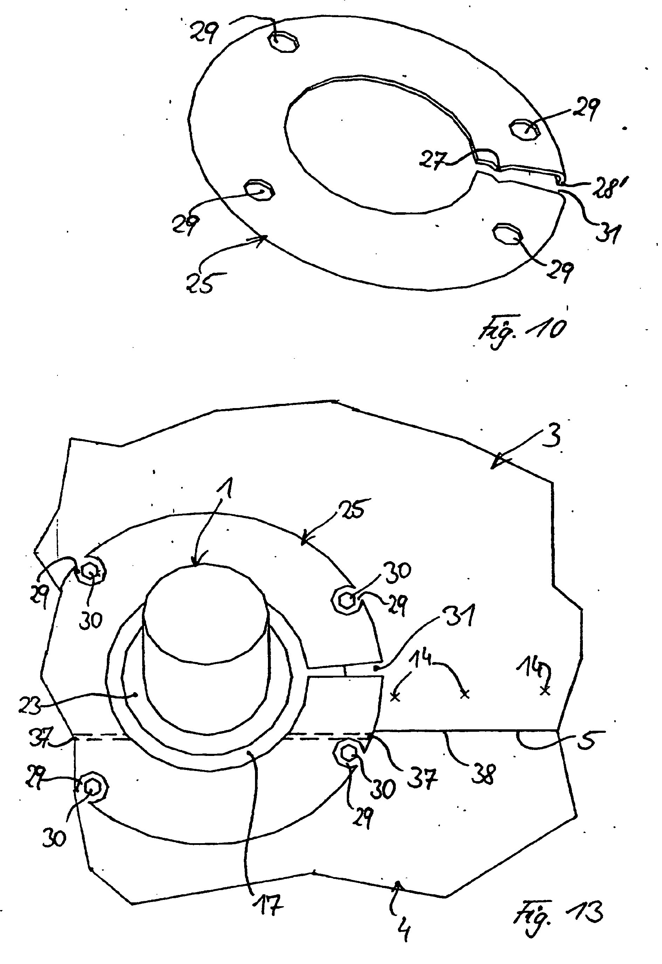

Die Dichtlippe 17 hat im Gegensatz zur Haltelippe 18 die eigentliche Abdichtungsfunktion. Sie hat einen größeren Radius als die Haltelippe 18 und steht im Montagezustand über den öffnungsrand der Durchführungsöffnung 7 hinaus, der von beiden Aussparungsrändern 9,9' und einem von der zweiten Teilwand 4 nicht abgedeckten Abschnitt der Randkante 5 der ersten Teilwand 3 gebildet wird. Die Querschnittsstärke der Dichtlippe 17 ist im Vergleich zur Querschnittsstärke der Haltelippe 18 verhältnismäßig klein. Dieser kleine Dicken-Querschnitt ermöglicht es unter anderem, daß die Dichtlippe 17 zwischen der Wand 2 und einem separaten Klemmkörper 25 (Fig.7) mit geringem Kraftaufwand unbeweglich klemmfixierbar ist und hierdurch die Durchführungsöffnung 7 im Montagezustand absolut dicht verschlossen ist.

Der Klemmkörper 25 hat in dem dargestellten Ausführungsbeispiel die Form einer ringförmigen Scheibe mit einer zentralen Dichtöffnung 26. Diese Dichtöffnung 26 ist kreisrund ausgebildet und umgibt den Tüllenansatz 23. Die Dichtöffnung 26 ist radial von einem Dichtungsrand 34 umgeben, welcher einen radial inneren Klemmsteg 27 und einen radial äußeren Anlagesteg 28 umfaßt. Der Innendurchmesser des Anlagesteges 28 ist etwas größer als der Außendurchmesser der Dichtlippe 17 und liegt deshalb bei klemmfixierter Dichtlippe 17 unmittelbar an der Wand 2 an. Der Anlagesteg 28 steht in Axialrichtung bzw. in Richtung der Mittellängsachse 15 über den Klemmsteg 27 hinaus. Dieser axiale Überstand d ermöglicht eine axiale und gleichzeitig radiale Abdekkung der Dichtlippe 17. Dies wiederum ermöglicht ohne zusätzliche Bauteile einen guten Beschädigungsschutz für die Dichtlippe 17 und somit eine wirksame Abdichtung der Durchführungsöffnung 7.

Alternativ liegt der Anlagesteg 28 unter Zwischenlage einer zusätzlichen Schicht (z.B. isolierende oder abdichtende Schicht) an der Wand 2 an. Hierdurch kann die Dichtungswirkung weiter verbessert werden.

Der Klemmkörper 25 ist derart ausgestaltet, daß der Klemmsteg 27 im Montagezustand an der Lippenoberfläche 24 der Dichtlippe 17 anliegt und sie mit in Durchführungsrichtung 8 verlaufender Klemmkraft klemmfixiert (Fig.6). Zur Erzeugung der Klemmkraft sind noch zu erläuternde Spannmittel vorgesehen. Diese Spannmittel können den Klemmkörper 25 in Durchführungsrichtung 8 kraftbeaufschlagen, so daß der Dichtungsrand 34, insbesondere der Anlagesteg 28, an die Wand 2 gepreßt und dabei ggfs. von den Spannmitteln komprimiert wird und sich der Klemmsteg 27 an die Lippenoberfläche 24 anlegt. In einer bevorzugten Ausführungsform ist der Überstand d kleiner als die axiale Querschnittsstärke der Dichtlippe 17. Hierdurch wird die Abdichtung der Durchführungsöffnung 7 mit geringem Kraftaufwand verstärkt.

Der Anlagesteg 28 ist von insgesamt vier in Axialrichtung bzw. in Klemmkraftrichtung verlaufenden Aufnahmekanälen 29 zur Aufnahme jeweils eines Gewindebolzens 30 durchsetzt, der an der Teilwand 3 bzw. 4 befestigt, z.B. angeschweißt ist (Fig.9). Jeweils zwei Gewindebolzen 30 sind an einer Teilwand 3 oder Teilwand 4 befestigt, wobei die Mittellängsachsen der Gewindebolzen 30 rechtwinklig zur Wandebene der Wand 2 verlaufen. Die Gewindebolzen 30 weisen ein hier nicht näher dargestelltes Außengewinde auf und korrespondieren jeweils mit einem Innengewinde 35, welches Bestandteil eines Spannelementes 36 (z.B. eine Schraubenmutter) ist. Das Spannelement 36 wird bei der Montage des Klemmkörpers 25 auf das der Wand 2 abgewandte und über den Aufnahmekanal 29 hinausragende Freiende des Gewindebolzens 30 aufgeschraubt. Durch das Aufschrauben des Spannelementes 36 wird die der Dichtlippe 17 axial abgewandte Oberfläche des ringförmigen Dichtungsrandes 34 des Klemmkörpers 25 automatisch mit einer Spannkraft beaufschlagt.

Der Dichtungsrand 34 des Klemmkörpers 25 ist von einem quer zu seiner Umfangsrichtung, d.h. radial verlaufenden Schlitz 31 durchtrennt. Hierdurch kann der Klemmkörper 25 besonders montagefreundlich auf den Kabelbaum 1 aufgebracht werden, um als Klemmbacke zur Klemmfixierung der Dichtlippe 17 wirksam zu sein.

Um zu vermeiden, daß der auf die Dichtlippe 17 ausgeübte Klemmdruck partiell niedriger oder ungleichmäßig ist, können die Gewindebolzen 30 und die Aufnahmekanäle 29 derart angeordnet sein, daß der'Schlitz 31 während der Montage nicht rechtwinklig zur Trennfuge 32 zwischen beiden Teilwänden 3,4 positioniert ist. In einer weiteren Ausführungsform ist der Schlitz 31 parallel zur Trennfuge 32 positioniert. Von den beiden den Schlitz 31 legrenzenden Grenzabschnitten 33 und 33' des Klemmkörpers 25 liegt dann der Grenzabschnitt 33 nur an der Teilwand 3 an, während der Grenzabschnitt 33' nur an der Teilwand 4 anliegt. Eine durch den absatzartigen Oberflächensprung 38 zwischen beiden Teilwänden 3,4 im Bereich der Trennfuge 32 entstehende ungleichmäßige Klemmfixierung der Dichtlippe 17 kann in diesem Fall gezielt ausgeglichen werden. In den dargestellten Ausführungsbeispielen sind die Gewindebolzen 30 in Umfangsrichtung der Dichtlippe 17 derart verteilt angeordnet, daß das Winkelbogenmaß zwischen benachbarten Gewindebolzen unterschiedlich ist. Diese "Kodierung" gewährleistet eine eindeutige Funktionsstellung des Klemmkörpers 25. Um die Kodierung zu realisieren, sind die Aufnahmekanäle 29 bzw. die Gewindebolzen 30 nicht punktsymmetrisch zum Mittelpunkt der Dichtöffnung 26 angeordnet. In einer bevorzugten Ausführungsform sind die Aufnahmekanäle 29 bzw. die Gewindebolzen 30 spiegelsymmetrisch zur Schnittlinie VIII-VIII in Fig.7 angeordnet.

Bei der Montage wird der Kabelbaum 1 zunächst in Einsetzrichtung 20, d.h. quer zur Durchführungsrichtung 8, in die Teilöffnung 6 der ersten Teilwand 3 eingesetzt. Der ringförmige Klemmkörper 25 kann - muß aber nicht - zu diesem Zeitpunkt bereits auf dem Kabelbaum 1 aufgebracht sein. Danach werden die beiden Teilwände 3,4 aus der Ausgangslage heraus etwa in Durchführungsrichtung 8 einander angenähert. Vorzugsweise wird nur eine Teilwand - insbesondere die zweite Teilwand 4 - in Richtung der anderen Teilwand transportiert. In seiner Ausgangslage befindet sich dabei die zweite Teilwand 4 auf der der Dichtlippe 17 abgewandten Seite der Haltelippe 18.

Da der Radius der Teilöffnung 6' der zweiten Teilwand 4 größer ist als der Radius der Haltelippe 18, werden fertigungs- und montagebedingt vorhandene Maßtoleranzen zwischen den zu montierenden Bauteilen berücksichtigt und die zweite Teilwand 4 kann in Durchführungsrichtung 8 an die erste Teilwand 3 behinderungsfrei herangeführt werden. Dies ist beispielsweise bei einer automatisierten Fertigung und hier insbesondere bei der Modulbauweise von Fahrzeugen von großer Bedeutung, da hier die Fahrzeugmodule teilweise horizontal zusammengeführt werden müssen. Die aneinander herangeführten Teilwände 3,4 überlappen sich mit ihren Randsegmenten 13,13' und werden im Bereich der Randsegmente 13, 13' durch eine geeignete Verbindungstechnik (z.B. Punktschweißen) miteinander fest verbunden. Danach wird der Klemmkörper 25 an der Wand 2 durch die Gewindebolzen 30 und entsprechende Innengewinde 35 fest fixiert, wie dies im einzelnen oben beschrieben worden ist. Dabei wird die Dichtlippe 17 zwischen dem Klemmkörper 25 und der Wand 2 schraubstockartig eingeklemmt.

Im Falle einer Demontage wird zunächst der Klemmkörper 25 abgeschraubt. Sind die Teilwände 3,4 lösbar aneinander befestigt (z.B. miteinander verschraubt), werden danach die Teilwände 3,4 voneinander getrennt und sodann wird der Kabelbaum 1 der Einsetzrichtung 20 entgegengesetzt aus der Teilöffnung 6 herausgezogen. Bei unlösbar aneinander befestigten Teilwänden 3,4 (z.B. miteinander verschweißt) wird nach entferntem Klemmkörper 25 der Kabelbaum 1 vorzugsweise in Verschieberichtung. 21 durch die Durchführungsöffnung 7 bewegt und die Haltelippe 18 wird aus der Durchführungsöffnung 7 ausgeknüpft.

In Fig.10 ist der Klemmkörper 25 in einer weiteren Ausführungsform dargestellt, wobei die Aufnahmekanäle 29 zwischen dem inneren Klemmsteg 27 und einem äußeren Anlagesteg 28' angeordnet sind. Dieser äußere Anlagesteg 28' ist erheblich schmaler ausgeführt als der entsprechende Anlagesteg 28 gemäß Fig.7. Der Anlagesteg 28' ist auf den radial äußeren Rand des Klemmkörpers 25 beschränkt. Vorzugsweise ist der Klemmkörper 25 gemäß Fig.10 aus Metall, insbesondere als Stanzzieh- oder Stanzprägeteil, hergestellt. Die Aufnahmekanäle 29 sind bevorzugt dem äußeren Anlagesteg 28' in Radialrichtung näher benachbart als dem inneren Klemmsteg. 27. Hierdurch wird eine übermäßige Quetschung der zu klemmenden Dichtlippe 17 beim Montagevorgang vermieden.

In Fig.11 ist die Teilwand 4 gekröpft ausgebildet, d.h. sie weist zwischen ihrem Randsegment 13' und dem übrigen Bereich eine Abkröpfung 39 auf. Hierdurch wird der ansonsten zwischen beiden Teilwänden 3,4 entstehende Oberflächensprung 38 ausgeglichen. Die beiden dem Randsegment 13' abgewandten Oberflächen der Teilwände 3,4 bilden dasselbe Oberflächenniveau 40. Die im Bereich der Abkröpfung 39 entstehende Rinne 41 wird vorzugsweise bei der Montage von dem Dichtungselement, insbesondere von einer elastisch ausgebildeten Dichtlippe 17 ausgefüllt.

In Fig.12 wird der durch die sich überlappenden Teilwände 3,4 im Bereich der Randsegmente 13,13' entstehende absatzartige Oberflächensprung 38 dadurch ausgeglichen, daß die der Dichtlippe 17 zugewandte Seite des Klemmkörpers 25 eine Ausgleichschräge 37 aufweist, die sich unmittelbar an die Dichtlippe 17 anlegt. Vorzugsweise verläuft die Ausgleichschräge 37 in einem Winkel w von etwa 45° gegenüber den unmittelbar benachbarten Oberflächenbereichen des Klemmkörpers 25 bzw. seines Dichtungsrandes 34. In Fig. 12 ist die Ausgleichschräge 37 am Klemmsteg 27, und zwar an dessen radial innerem Bereich, angeordnet. Die exakte Anordnung und der Querschnitt der Ausgleichschräge 37 am Klemmkörper 25 hängt individuell vom Verlauf des Oberflächensprungs 38 an den Teilwänden 3,4 und der vorgesehenen Relativlage des Klemmkörpers 25 gegenüber den Teilwänden 3,4 ab. In Fig. 13 verläuft die Ausgleichschräge 37 entsprechend der geraden Randkanten 5 der Teilwand 3 linienförmig nach Art etwa einer Sehne entlang des Klemmkörpers 25.

Es sei darauf hingewiesen, daß die in den Figurenzeichnungen sichtbaren Querschnittskanten insbesondere des Kabelbaumes 1, des Dichtungselementes 12, des Klemmkörpers 25, der Aufnahmekanäle 29 und der Gewindebolzen 30 lediglich konstruktionszeichnungsbedingt von einer exakten Kreisbogenform abweichen, jedoch sehr wohl die Querschnitte von Kreisen oder Kreisbogen darstellen sollen.

In weiteren, hier nicht dargestellten Ausführungsformen können die vorgenannten kreis- oder kreisbogenförmigen Querschnittskanten zumindest teilweise durch quadratische, rechteckige oder allgemein polygonförmige Querschnitte ersetzt sein, wenn diese Querschnittskanten für einen bestimmten Anwendungsfall geeignet sind.

## Patentansprüche

1. Durchführung für eine Leitung (1) durch eine Wand (2,3,4), welche von einer randgeschlossenen Durchführungsöffnung (6,6',7) zum Durchführen einer Leitung (1) durchsetzt ist, wobei
- die Wand (2) mehrere aneinander befestigte Teilwände (3,4) umfaßt,
- mindestens zwei Teilwände (3,4) jeweils eine Randkante (5,5') aufweisen, welche von einer als Teilöffnung (6, 6') wirksamen Aussparung unterbrochen sind und
- die miteinander korrespondierenden Teilöffnungen (6,6') gemeinsam die Durchführungsöffnung (7) bilden,
**dadurch gekennzeichnet,**
**daß** der Querschnitt der Teilöffnung (6) einer Teilwand (3) in Richtung der von ihr unterbrochenen Randkante (5) verjüngt ausgebildet ist.

2. Durchführung nach Anspruch 1,
**dadurch gekennzeichnet,**
**daß** der Aussparungsrand (9,9') der Teilöffnung (6,6') mindestens einer Teilwand (3,4) bogenartig, insbesondere kreisbogenförmig, verläuft und mit seiner Konkavseite einer korrespondierenden Teilöffnung (6,6') zugewandt ist.

3. Durchführung nach Anspruch 1,
**dadurch gekennzeichnet,**
**daß** die lichte Öffnungsweite (w) der Teilöffnung (6) im Bereich der Randkante (5) kleiner ist als die größte parallel zur lichten Öffnungsweite (w) verlaufende lichte Weite dieser Teilöffnung (6).

4. Durchführung nach Anspruch 1,
**dadurch gekennzeichnet,**
- **daß** sich die Teilwände (3,4) mit den Aussparungsrändern (9,9') benachbarten und mindestens einen Abschnitt der unterbrochenen Randkanten (5,5') enthaltenden Randsegmenten (13, 13') im Befestigungszustand der Teilwände (3, 4) gegenseitig überlappen und
- **daß** ein Randsegment (13,13') einer Teilwand (3,4) an einem Randsegment (13, 13') einer benachbarten Teilwand (3,4) befestigt ist.

5. Durchführung nach Anspruch 4,
**dadurch gekennzeichnet,**
**daß** im Bereich der Überlappung der eine Aussparungsrand (9,9') den korrespondierenden Aussparungsrand (9,9') quer zur Durchführungsrichtung (8) mit Abstand umgibt.

6. Durchführung nach einem der vorhergehenden Ansprüche, **dadurch gekennzeichnet, daß** ein im Montagezustand den Umfang der Leitung (1) umfassendes Dichtungselement (12) vorgesehen ist, welches mindestens eine etwa quer zur Durchführungsrichtung (8) angeordnete Dichtlippe (17) zur Abdichtung der Durchführungsöffnung (6,6',7) trägt, wobei
die Dichtlippe (17) derart dimensioniert ist, daß sie im Montagezustand über den Rand (9,9') der Durchführungsöffnung (6,6',7) hinaussteht und mit einem Klemmkörper (25) derart zusammenwirkt, daß sie zwischen der Wand (2,3,4) und dem Klemmkörper (25) klemmfixiert ist.

7. Durchführung nach Anspruch 6,
**dadurch gekennzeichnet,**
**daß** der Klemmkörper (25) von einer zentralen Dichtöffnung (26) für die Leitung (1) oder für das Dichtungselement (12) durchsetzt ist und einen die Dichtöffnung (26) umgebenden Dichtungsrand (34) zur Klemmfixierung der Dichtlippe (17) aufweist.

8. Durchführung nach Anspruch 7,
**dadurch gekennzeichnet,**
**daß** der Dichtungsrand (34) zur Klemmfixierung der Dichtlippe (17) im Montagezustand in Richtung der Wand (2,3,4) durch mindestens ein Spannmittel (30,36) kraftbeaufschlagt ist.

9. Durchführung nach Anspruch 8,
**dadurch gekennzeichnet,**
**daß** der Dichtungsrand (34) von mindestens einem in Klemmkraftrichtung verlaufenden Aufnahmekanal (29) zur Aufnahme eines Spannmittels (30) durchsetzt ist, welches zumindest im Montagezustand an der Wand (2,3,4) fixiert ist.

10. Durchführung nach Anspruch 8,
**dadurch gekennzeichnet,**
- **daß** das Spannmittel einen an der Wand (2,3,4) befestigten, ein Außengewinde tragenden Gewindebolzen (30) und ein damit korrespondierendes Innengewinde (35) umfaßt und
- **daß** das Innengewinde (35) Bestandteil eines Spannelementes (36) ist, welches die der Dichtlippe (17) abgewandte Seite des Dichtungsrandes (34) beaufschlagt.

11. Durchführung nach Anspruch 7,
**dadurch gekennzeichnet,**
**daß** der Dichtungsrand (34) auf seiner der Dichtlippe (17) zugewandten Seite eine Ausgleichschräge (37) aufweist, welche mit einem Oberflächensprung (38) der sich überlappenden Teilwände (3,4) korrespondiert.

12. Durchführung nach Anspruch 7,
**dadurch gekennzeichnet,**
**daß** der Dichtungsrand (34)
- einen äußeren Anlagesteg (28) aufweist, der im Montagezustand den Umfangsrand der Dichtlippe (17) umgibt und
- einen zwischen äußerem Anlagesteg (28) und zentraler Dichtöffnung (26) angeordneten inneren Klemmsteg (27) aufweist, der im Montagezustand an der Dichtlippe (17) anliegt.

13. Durchführung nach Anspruch 7,
**dadurch gekennzeichnet,**
**daß** der Anlagesteg (28) den Klemmsteg (27) in Richtung der Dichtlippe (17) derart übersteht, daß der Überstand (d) kleiner ist als die Querschnittsstärke des zu klemmfixierenden Bereiches der Dichtlippe (17).

14. Durchführung nach den Ansprüchen 10 und 12,
**dadurch gekennzeichnet,**
**daß** der mindestens eine Aufnahmekanal (29) zwischen dem Klemmsteg (27) und dem Anlagesteg (28) angeordnet ist.

15. Durchführung nach Anspruch 7,
**dadurch gekennzeichnet,**
**daß** der Dichtungsrand (34) von einem quer zu seiner Umfangsrichtung verlaufenden Schlitz-(31) durchtrennt ist.

16. Durchführung nach Anspruch 6,
**dadurch gekennzeichnet,**
**daß** das Dichtungselement (12) eine von der Dichtlippe (17) beabstandete und etwa parallel zur Dichtlippe (17) verlaufende Haltelippe (18) trägt, wobei die beiden Lippen (17,38) zwischen sich eine in Umfangsrichtung der Leitung (1) verlaufende Fixiernut (19) begrenzen.

17. Durchführung nach Anspruch 16,
**dadurch gekennzeichnet,**
**daß** die Nutbreite (b) größer ist als die Querschnittsstärke eines aufzunehmenden Randes (9) der Durchführungsöffnung (6,6',7).

18. Durchführung nach Anspruch 1 oder 6,
**gekennzeichnet durch**
ihre Verwendung an einer Trennwand (2) eines Kraftfahrzeugs.

19. Durchführung nach Anspruch 18,
**gekennzeichnet durch**
ihre Verwendung an einer Trennwand (2) von miteinander korrespondierenden Rohbau-Modulen, an denen jeweils eine Teilwand (3, 4) befestigt ist.

## Claims

1. Leadthrough for a line (1) through a wall (2, 3, 4), which is passed through by a peripherally closed leadthrough opening (6, 6', 7) for leading through the line (1), wherein
- the wall (2) comprises a plurality of part-walls (3, 4) fastened to one another,
- at least two part-walls (3, 4) in each case have a peripheral edge (5, 5') which are interrupted by a clearance acting as a part-opening (6, 6') and
- the part-openings (6, 6') that correspond with one another together form the leadthrough opening (7), **characterized in that** the cross section of the part-opening (6) of one part-wall (3) is tapered in the direction of the peripheral edge (5) interrupted by it.

2. Leadthrough according to Claim 1, **characterized in that** the clearance periphery (9, 9') of the part-opening (6, 6') of at least one part-wall (3, 4) runs in an arc-like manner, in particular in a circular-arc-shaped manner, and has its concave side facing a corresponding part-opening (6, 6').

3. Leadthrough according to Claim 1, **characterized in that** the clear opening width (w) of the part-opening (6) in the region of the peripheral edge (5) is less than the greatest clear width of this part-opening (6), running parallel to the clear opening width (w).

4. Leadthrough according to Claim 1, **characterized**
- **in that**, in the fastened state of the part-walls (3, 4), the part-walls (3, 4) mutually overlap with the clearance peripheries (9, 9') of neighbouring peripheral segments (13, 13') containing at least one portion of the interrupted peripheral edges (5, 5') and
- **in that** a peripheral segment (13, 13') of one part-wall (3, 4) is fastened to a peripheral segment (13, 13') of a neighbouring part-wall (3, 4).

5. Leadthrough according to Claim 4, **characterized in that**, in the region of overlap, one clearance periphery (9, 9') surrounds the corresponding clearance periphery (9, 9') transversely with respect to the leading-through direction (8) with a spacing.

6. Leadthrough according to one of the preceding claims, **characterized in that** a sealing element (12) is provided, which in the assembled state embraces the circumference of the line (1) and bears at least one sealing lip (17), arranged approximately transversely with respect to the leading-through direction (8), for sealing the leadthrough opening (6, 6', 7), the sealing lip (17) being dimensioned in such a way that, in the assembled state, it protrudes beyond the periphery (9, 9') of the leadthrough opening (6, 6', 7) and interacts with a clamping member (25) in such a way that it is fixed in a clamped manner between the wall (2, 3, 4) and the clamping member (25).

7. Leadthrough according to Claim 6, **characterized in that** the clamping member (25) is passed through by a central sealing opening (26) for the line (1) or for the sealing element (12) and has a seal periphery (34), surrounding the sealing opening (26), for the clamping-type fixing of the sealing lip (17).

8. Leadthrough according to Claim 7, **characterized in that**, in the assembled state, the seal periphery (34) is subjected to force in the direction of the wall (2, 3, 4) by at least one clamping means (30, 36) for the clamping-type fixing of the sealing lip (17).

9. Leadthrough according to Claim 8, **characterized in that** the seal periphery (34) is passed through by at least one receiving channel (29), running in the direction of the clamping force, for receiving a clamping means (30) which, at least in the assembled state, is fixed on the wall (2, 3, 4).

10. Leadthrough according to Claim 8, **characterized**
- **in that** the clamping means comprises a threaded bolt (30), which is fastened on the wall (2, 3, 4) and bears an external thread, and an internal thread (35) corresponding with it, and
- **in that** the internal thread (35) is a component part of a clamping element (36), which acts on the side of the seal periphery (34) facing away from the sealing lip (17).

11. Leadthrough according to Claim 7, **characterized in that** the seal periphery (34) has on its side facing the sealing lip (17) a compensating slope (37), which corresponds with a surface discontinuity (38) of the overlapping part-walls (3, 4).

12. Leadthrough according to Claim 7, **characterized in that** the seal periphery (34)
- has an outer bearing web (28), which in the assembled state surrounds the circumferential seal periphery lip (17), and
- an inner clamping web (27), which is arranged between the outer bearing web (28) and the central sealing opening (26) and, in the assembled state, bears against the sealing lip (17).

13. Leadthrough according to Claim 7, **characterized in that** the bearing web (28) protrudes beyond the clamping web (27) in the direction of the sealing lip (17) in such a way that the projection (d) is less than the cross-sectional thickness of the region of the sealing lip (17) to be fixed in a clamped manner.

14. Leadthrough according to Claims 10 and 12, **characterized in that** the at least one receiving channel (29) is arranged between the clamping web (27) and the bearing web (28).

15. Leadthrough according to Claim 7, **characterized in that** the seal periphery (34) is cut by a slit (31) running transversely with respect to its circumferential direction.

16. Leadthrough according to Claim 6, **characterized in that** the sealing element (12) bears a retaining lip (18) spaced apart from the sealing lip (17) and running approximately parallel to the sealing lip (17), the two lips (17, 18) bounding between them a fixing groove (19) running in the circumferential direction of the line (1).

17. Leadthrough according to Claim 16, **characterized in that** the groove width (b) is greater than the cross-sectional thickness of a periphery (9) of the leadthrough opening (6, 6', 7) to be received.

18. Leadthrough according to Claim 1 or 6, **characterized by** its use on a separating wall (2) of a motor vehicle.

19. Leadthrough according to Claim 18, **characterized by** its use on a separating wall (2) of shell modules corresponding with one another, on which a separating wall (2) is respectively fastened.

## Revendications

1. Traversée pour une conduite (1) à travers une paroi (2, 3, 4), qui est traversée par une ouverture de passage (6, 6', 7) fermée au niveau des bords pour le passage d'une conduite (1),
- la paroi (2) comprenant plusieurs parois partielles (3, 4) fixées les unes aux autres,
- au moins deux parois partielles (3, 4) présentant chacune une arête de bord (5, 5'), lesquelles sont interrompues par un évidement servant d'ouverture partielle (6, 6') et
- les ouvertures partielles (6, 6') correspondant l'une à l'autre formant ensemble l'ouverture de passage (7),
**caractérisée en ce que**
la section transversale de l'ouverture partielle (6) d'une paroi partielle (3) est réalisée sous forme rétrécie dans la direction de l'arête de bord (5) qu'elle interrompt.

2. Traversée selon la revendication 1,
**caractérisée en ce que**
le bord de l'évidement (9, 9') de l'ouverture partielle (6, 6') d'au moins une paroi partielle (3, 4) s'étend suivant une forme courbe, notamment une forme courbe circulaire, et est tourné avec son côté concave vers une ouverture partielle correspondante (6, 6').

3. Traversée selon la revendication 1,
**caractérisée en ce que**
la petite largeur d'ouverture (w) de l'ouverture partielle (6) dans la région de l'arête de bord (5) est plus petite que la plus grande largeur de cette ouverture partielle (6) s'étendant parallèlement à la petite largeur d'ouverture (w).

4. Traversée selon la revendication 1,
**caractérisée en ce que**
- les parois partielles (3, 4) avec des segments de bord (13, 13') voisins des bords de l'évidement (9, 9') et contenant au moins une portion des arêtes de bord interrompues (5, 5') se chevauchent mutuellement dans l'état de fixation des parois partielles (3, 4) et
- **en ce qu'**un segment de bord (13, 13') d'une paroi partielle (3, 4) est fixé à un segment de bord (13, 13') d'une paroi partielle voisine (3, 4).

5. Traversée selon la revendication 4,
**caractérisée en ce que**
dans la région du chevauchement, un bord de l'évidement (9, 9') entoure le bord de l'évidement correspondant (9', 9) à un espacement transversalement à la direction de la traversée (8).

6. Traversée selon l'une quelconque des revendications précédentes, **caractérisée en ce qu'**il est prévu un élément d'étanchéité (12) entourant la périphérie de la conduite (1) dans l'état monté, lequel porte au moins une lèvre d'étanchéité (17) disposée approximativement transversalement à la direction de la traversée (8), pour réaliser l'étanchéité de l'ouverture de passage (6, 6', 7),
la lèvre d'étanchéité (17) étant dimensionnée de telle sorte qu'elle sorte dans l'état monté au-delà du bord (9, 9') de l'ouverture de passage (6, 6', 7) et coopère avec un corps de serrage (25) de telle sorte qu'elle soit fixée par serrage entre la paroi (2, 3, 4) et le corps de serrage (25).

7. Traversée selon la revendication 6,
**caractérisée en ce que**
le corps de serrage (25) est traversé par une ouverture d'étanchéité centrale (26) pour la conduite (1) ou pour l'élément d'étanchéité (12), et présente un bord d'étanchéité (34) entourant l'ouverture d'étanchéité (26) pour la fixation par serrage de la lèvre d'étanchéité (17).

8. Traversée selon la revendication 7,
**caractérisée en ce que**
le bord d'étanchéité (34) pour la fixation par serrage de la lèvre d'étanchéité (17) est sollicité par une force dans l'état monté dans la direction de la paroi (2, 3, 4) par au moins un moyen de serrage (30, 36).

9. Traversée selon la revendication 8,
**caractérisée en ce que**
le bord d'étanchéité (34) est traversé par au moins un canal de réception (29) s'étendant dans la direction de la force de serrage pour recevoir un moyen de serrage (30), qui est fixé à la paroi (2, 3, 4) au moins dans l'état monté.

10. Traversée selon la revendication 8,
**caractérisée en ce que**
- le moyen de serrage comprend un boulon fileté (30) fixé à la paroi (2, 3, 4), portant un filetage externe, et un filetage interne correspondant (35) et
- **en ce que** le filetage interne (35) fait partie d'un élément de serrage (36) qui sollicite le côté du bord d'étanchéité (34) opposé à la lèvre d'étanchéité (17).

11. Traversée selon la revendication 7,
**caractérisée en ce que**
le bord d'étanchéité (34) présente, sur son côté tourné vers la lèvre d'étanchéité (17), un biseau de compensation (37), qui correspond à un saut de surface (38) des parois partielles (3, 4) se chevauchant.

12. Traversée selon la revendication 7,
**caractérisée en ce que**
le bord d'étanchéité (34)
- présente une nervure d'appui extérieure (28) qui, dans l'état monté, entoure le bord périphérique de la lèvre d'étanchéité (17) et
- présente une nervure de serrage intérieure (27) disposée entre la nervure d'appui extérieure (28) et l'ouverture d'étanchéité centrale (26), qui s'applique contre la lèvre d'étanchéité (17) dans l'état monté.

13. Traversée selon la revendication 7,
**caractérisée en ce que**
la nervure d'appui (28) dépasse de la nervure de serrage (27) dans la direction de la lèvre d'étanchéité (17) de telle sorte que le dépassement (d) soit plus petit que l'épaisseur en section transversale de la région de la lèvre d'étanchéité (17) à fixer par serrage.

14. Traversée selon les revendications 10 et 12,
**caractérisée en ce que**
l'au moins un canal de réception (29) est disposé entre la nervure de serrage (27) et la nervure d'appui (28).

15. Traversée selon la revendication 7,
**caractérisée en ce que**
le bord d'étanchéité (34) est séparé par une fente (31) s'étendant transversalement à sa direction périphérique.

16. Traversée selon la revendication 6,
**caractérisée en ce que**
l'élément d'étanchéité (12) porte une lèvre de retenue (18) espacée de la lèvre d'étanchéité (17) et s'étendant approximativement parallèlement à la lèvre d'étanchéité (17), les deux lèvres (17, 18) délimitant entre elles une rainure de fixation (19) s'étendant dans la direction périphérique de la conduite (1).

17. Traversée selon la revendication 16,
**caractérisée en ce que**
la largeur de la rainure (b) est supérieure à l'épaisseur en section transversale d'un bord (9) à recevoir de l'ouverture de passage (6, 6', 7).

18. Traversée selon la revendication 1 ou 6,
**caractérisée par** son utilisation sur une paroi de séparation (2) d'un véhicule automobile.

19. Traversée selon la revendication 18,
**caractérisée par**
son utilisation sur une paroi de séparation (2) de modules de structure de carrosserie correspondants l'un à l'autre, auxquels est fixée une paroi partielle respective (3, 4).
